# EUROPEAN PATENT APPLICATION

(11) **EP 2 944 185 A1**
(43) Date of publication of application: **18.11.2015**
(21) Application number: 13871032.2
(22) Date of filing: 26.12.2013
(51) Int. Cl.: A01G 1/00, C05G 3/00

(54) **ARTIFICIAL SOIL MEDIUM**

(30) Priority: 11.01.2013 JP 2013003521
(71) Applicant: Toyo Tire & Rubber Co., Ltd., Osaka-shi, Osaka 550-8661 (JP)
(72) Inventor: ISHIZAKA, Nobuyoshi, Osaka-shi Osaka 550-8661 (JP)
(74) Representative: Hart-Davis, Jason
(86) International application number: PCT/JP2013/084931
(87) International publication number: WO 2014/109252

(57) **Abstract**

In an artificial soil medium including a collection of artificial soil particles, provided is a technique of allowing an appropriate nutrient(s) to be released during each growth stage of plant to be grown, or highly controlling the amount of a nutrient(s), depending on a plant to be grown. An artificial soil medium 100 includes a plurality of artificial soil particles 50 configured to release a nutrient. The plurality of artificial soil particles 50 include a plurality of types of artificial soil particles 50 configured to release different nutrients during different stages of a plant cultivation period. The plurality of types of artificial soil particles 50 are configured to release a nutrient in response to a change in an external environment.

## Description

### TECHNICAL FIELD

The present invention relates to artificial soil media which can be used in plant factories, etc.

### BACKGROUND ART

There have in recent years been an increasing number of plant factories, which allow for cultivation of plants such as vegetables, etc., in an environment under controlled growth conditions. In most conventional plant factories, leaf vegetables such as lettuce, etc., are hydroponically grown. More recently, there has been a move toward attempts to grow root vegetables, which are not suitable for hydroponic cultivation, in a plant factory.

In order to grow root vegetables, etc., it is necessary to change the types and amounts of nutrients to be applied, depending on the growth stage of the plant, and apply a fertilizer to the plant in several batches according to the fertilization schedule for the plant (e.g., initial fertilization, additional fertilization, etc.) until the harvest. Therefore, an artificial soil which allows for cultivation of root vegetables, etc., in a plant factory, has been required to have basic functions similar to those of natural soil, and in addition, particular functions which are difficult for natural soil to achieve, such as a reduction in the number of times a fertilizer is applied, etc.

Among the artificial soil-related technologies so far developed is a coated particulate fertilizer including fertilizer particles covered with a coating including a biodegradable powder (see, for example, Patent Document 1). Patent Document 1 states that the coating of the coated particulate fertilizer is gradually degraded in soil, whereby the release pattern of nutrients can be adjusted.

Another coated particulate fertilizer is known which is covered with a coating including a terpene resin and a heat flexible resin (see, for example, Patent Document 2). The coating of the coated particulate fertilizer of Patent Document 2 includes a terpene resin and a heat flexible resin, and therefore, the mechanical strength of the fertilizer is improved, and the initial release of nutrients is reduced.

A fertilizer composition is known which includes two coated particulate fertilizers which are released in a temperature-dependent manner (see, for example, Patent Document 3). Patent Document 3 states that the fertilizer composition can supply nutrients at appropriate times and in appropriate amounts in a cultivation environment in which there is a difference between the highest temperature and the lowest temperature.

### CITATION LIST

### PATENT LITERATURE

Patent Document 1: Japanese Unexamined Patent Application Publication No. H06-144981
Patent Document 2: Japanese Unexamined Patent Application Publication No. H11-60369
Patent Document 3: Japanese Unexamined Patent Application Publication No. 2009-234811

### SUMMARY OF INVENTION

### TECHNICAL PROBLEM

When an artificial soil is developed, it is, for example, necessary to provide a control function capable of appropriately supplying nutrients and moisture to a plant to be grown while achieving the ability to grow the plant that is similar to that of natural soil. In particular, the function of controlling the amount of nutrients supplied is important in order to reduce the number of times a fertilizer is applied to a plant, cultivate a plant at a high yield, and provide an optimum schedule for cultivating a plant, depending on the plant type. If nutrient release characteristics can be controlled so that nutrients are released from an artificial soil at times and in amounts appropriate for a plant, a high value-added artificial soil which has a particular function which is not possessed by natural soil can be provided.

However, in the techniques of Patent Documents 1 and 2 related to artificial soil, the fertilizer is designed at the particulate level, and is mixed with soil in use. It is difficult to significantly change or modify the functionality of the fertilizer to improve the nutrient release characteristics only by modifying the minute fertilizer at the particulate level. For example, as described in Patent Documents 1 and 2, different individual fertilizer particles may be covered with different coatings to have different nutrient release characteristics. In this case, however, when the fertilizer particles are mixed with soil, a difference between each individual fertilizer particle is not likely to appear on the entire soil, while an average of the characteristics of the fertilizer particles is exhibited, and therefore, the designed function is not always exhibited.

Also, in Patent Document 3, the fertilizer composition contains a combination of different fertilizer particles from which fertilizers are released in a temperature-dependent manner. However, the type and amount of a fertilizer nutrient required for a plant vary depending on the plant type and the growth stage. Therefore, it is difficult to invariably provide optimum nutrient supply. There is room for improvement.

With the above problems in mind, the present invention has been made. It is an object of the present invention to provide a technique of, in an artificial soil medium including a collection of artificial soil particles, releasing an appropriate nutrient(s) during each growth stage of a plant to be grown, and highly controlling the amount of a nutrient(s) to be applied, depending on a plant to be grown.

### SOLUTION TO PROBLEM

To achieve the object, an artificial soil medium includes a plurality of artificial soil particles configured to release a nutrient. The plurality of artificial soil particles include a plurality of types of artificial soil particles configured to release different nutrients during different stages of a plant cultivation period.

According to the artificial soil medium thus configured, the artificial soil medium includes a plurality of types of artificial soil particles configured to release different nutrients during different stages of a plant cultivation period. The different nutrient release characteristics of the different artificial soil particles are combined to mutually complement. Moreover, the different nutrient release characteristics of the artificial soil particles mixed allow different nutrients to be released during different periods. In other words, an artificial soil medium can be provided which can release different nutrients at optimum times and in optimum amounts throughout a plant cultivation period. Thus, the artificial soil medium of this configuration can control the type and amount of a nutrient released which is required during each growth stage of a plant, whereby the number of times of fertilization can be reduced, compared to an artificial soil medium including a single type of fertilizer particle. Also, by changing the nutrient release characteristics of the artificial soil particle, the timing and amount of a nutrient released from the artificial soil particle can be appropriately adjusted. Therefore, an artificial soil medium can be provided which can highly control the appropriate timing and amount of a nutrient(s) supplied, depending on a plant to be grown (i.e., a schedule for release of a nutrient is optimized).

In the artificial soil medium of the present invention, the plurality of types of artificial soil particles are preferably configured to release a nutrient in response to a change in an external environment.

According to the artificial soil medium thus configured, the plurality of types of artificial soil particles are configured to release a nutrient in response to a change in an external environment. Therefore, a nutrient needed in response to a change in an environment in which a plant is grown can be supplied to the plant at a time and in an amount optimum for a plant.

In the artificial soil medium of the present invention, at least one of the plurality of types of artificial soil particles is preferably covered with a degradable resin.

According to the artificial soil medium thus configured, at least one of the plurality of types of artificial soil particles is covered with a degradable resin. Therefore, the resin is degraded in response to a change in the external environment, so that a nutrient is released from the artificial soil particle. Therefore, a nutrient needed in response to a change in an environment in which a plant is grown can be supplied to the plant at a time and in an amount optimum for a plant.

In the artificial soil medium of the present invention, the degradable resin is preferably at least one selected from the group consisting of water-soluble resins, biodegradable resins, and acid degradable resins.

According to the artificial soil medium thus configured, the degradable resin is at least one selected from the group consisting of water-soluble resins, biodegradable resins, and acid degradable resins. Therefore, the resin is degraded in response to a change in the external environment such as the amount of moisture supplied to the artificial soil medium, the abundance of a microorganism, the amount of a root acid secreted from plant roots, the concentration of a fertilizer component such as phosphoric acid, etc., etc. Therefore, a nutrient needed in response to a change in an environment in which a plant is grown can be supplied to the plant at a time and in an amount optimum for a plant.

In the artificial soil medium of the present invention, the degradable resin is preferable at least one selected from the group consisting of starch, cellulose, pectin, gelatin, agar, alginates, carrageenan, xanthan gum, locust bean gum, tara gum, psyllium seed gum, dextrin, polyvinyl alcohol, polyacrylic acids, polyacrylamide, vinyl acetate, polyethyleneimine, polyalkylene oxide, polyethylene glycol, methyl cellulose, carboxymethyl cellulose, hydroxyethyl cellulose, modified starches, and oxidized starch.

According to the artificial soil medium thus configured, the degradable resin is at least one selected from the group consisting of the above resins. Therefore, the degradable resin can be reliably degraded in response to a change in the external environment. Therefore, a nutrient needed in response to a change in an environment in which a plant is grown can be supplied to the plant at a time and in an amount optimum for a plant. Also, the material after degradation is not harmful, and is not likely to cause environmental pollution.

In the artificial soil medium of the present invention, the plurality of types of artificial soil particles are preferably formed by granulation using different degradable resins.

According to the artificial soil medium thus configured, the plurality of types of artificial soil particles are formed by granulation using different degradable resins. Therefore, the resins are degraded at different times in response to changes in the external environment, so that nutrients are released from the artificial soil particles. Therefore, a nutrient needed in response to a change in an environment in which a plant is grown can be supplied to the plant at a time and in an amount optimum for a plant.

In the artificial soil medium of the present invention, the plurality of types of artificial soil particles are preferably formed by drying under different drying conditions.

According to the artificial soil medium thus configured, the plurality of types of artificial soil particles are formed by drying under different drying conditions. Therefore, the strength of the artificial soil particle varies depending on the drying condition. As a result, the different artificial soil particles disintegrate to release a nutrient at different times in response to a change in the external environment. Therefore, a nutrient needed in response to a change in an environment in which a plant is grown can be supplied to the plant at a time and in an amount optimum for a plant.

In the artificial soil medium of the present invention, at least one of the plurality of types of artificial soil particles preferably has ion exchange capability.

According to the artificial soil medium thus configured, at least one of the plurality of types of artificial soil particles has ion exchange capability. Therefore, the artificial soil particle can hold a nutrient which is required for growth of a plant. Therefore, an artificial soil medium can be provided which has the ability to grow a plant which is similar to that of natural soil.

In the artificial soil medium of the present invention, the plurality of types of artificial soil particles preferably include an artificial soil particle having cation exchange capability, an artificial soil particle having anion exchange capability, and an artificial soil particle having cation and anion exchange capabilities.

According to the artificial soil medium thus configured, the plurality of types of artificial soil particles include an artificial soil particle having cation exchange capability, an artificial soil particle having anion exchange capability, and an artificial soil particle having cation and anion exchange capabilities. Therefore, the artificial soil particles can hold nutrients required for growth of a plant. Therefore, an artificial soil medium can be provided which has the ability to grow a plant which is similar to or greater than that of natural soil.

In the artificial soil medium of the present invention, the plurality of types of artificial soil particles preferably have a particle size of 0.2 to 10 mm.

According to the artificial soil medium thus configured, the plurality of types of artificial soil particles have a particle size of 0.2 to 10 mm. Therefore, in particular, an easy-to-handle artificial soil which is suitable for cultivation of root vegetables can be provided.

### BRIEF DESCRIPTION OF DRAWINGS

[FIG. 1] FIG. 1 is a diagram schematically showing an artificial soil medium according to the present invention including a plurality of types of artificial soil particles.
[FIG. 2] FIG. 2 is a diagram schematically showing artificial soil particles included in the artificial soil medium of the present invention.
[FIG. 3] FIG. 3 is a diagram for describing an artificial soil medium according to a first embodiment of the present invention.
[FIG. 4] FIG. 4 is a diagram for describing an artificial soil medium according to a second embodiment of the present invention.
[FIG. 5] FIG. 5 is a diagram for describing an artificial soil medium according to a third embodiment of the present invention.
[FIG. 6] FIG. 6 is a diagram for describing an artificial soil medium according to a fourth embodiment of the present invention.
[FIG. 7] FIG. 7 is a diagram for describing an artificial soil medium according to a fifth embodiment of the present invention.

### DESCRIPTION OF EMBODIMENTS

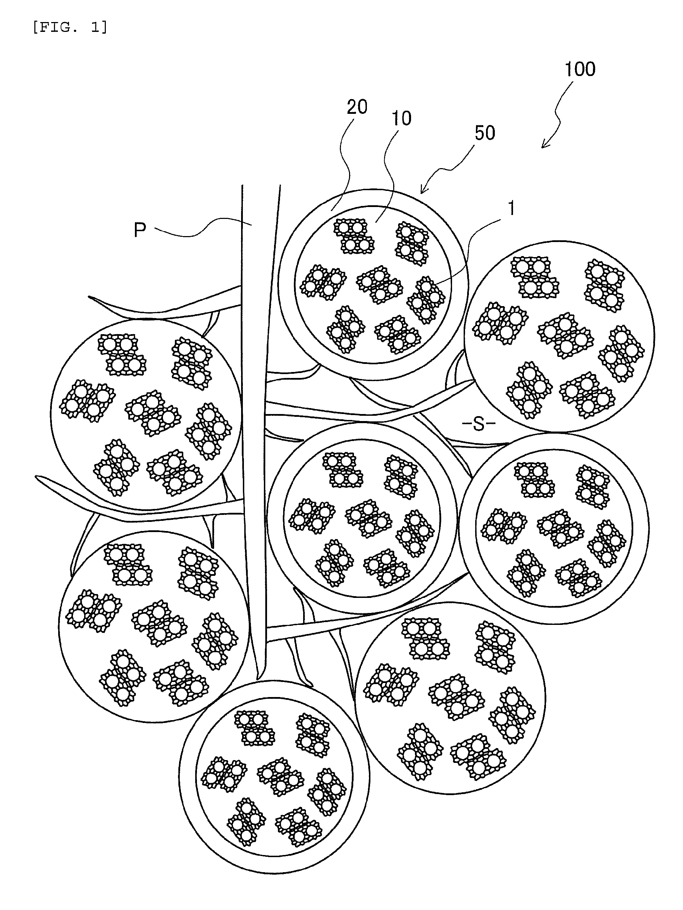

Embodiments relating to an artificial soil medium according to the present invention will now be described with reference to FIGS. 1 to 7. Note that the present invention is not intended to be limited to configurations described in the following embodiments and shown in the accompanying drawings.

FIG. 1 is a diagram schematically showing an artificial soil medium 100 according to the present invention including a plurality of types of artificial soil particles 50. The plurality of types of artificial soil particles 50 of the artificial soil medium 100 here illustrated are two types of artificial soil particles having different nutrient release characteristics. The artificial soil particle 50 includes a base 10 for holding a nutrient(s). The nutrient release characteristics are changed by providing or not providing a cover layer 20 which covers an outer surface portion of the base 10. The nutrient contained in the base 10 is released from the base 10 into an external environment by being dissolved in moisture (including alkaline water, acidic water, etc.) which exists in the external environment and is needed for growth of a plant P, by being dissolved in an organic acid secreted by plant roots (root acid), by being dissolved in phosphoric acid which is held as a nutrient, etc. As used herein, the term "external environment" refers to an environment external to the artificial soil particle 50. Also, as used herein, a state in which a nutrient is released is defined as "nutrient release characteristics." In the artificial soil medium 100 of FIG. 1 in which the artificial soil particles 50 are clustered together, interstices S formed between the artificial soil particles 50 correspond to the external environment. The timing and amount of a nutrient supplied from the artificial soil particle 50 to the plant P to be grown can be adjusted by controlling a state of the nutrient held in the base 10 and nutrient release characteristics from the base 10 to the external environment. The artificial soil particle 50 will now be described in greater detail.

### (First Artificial Soil Particle)

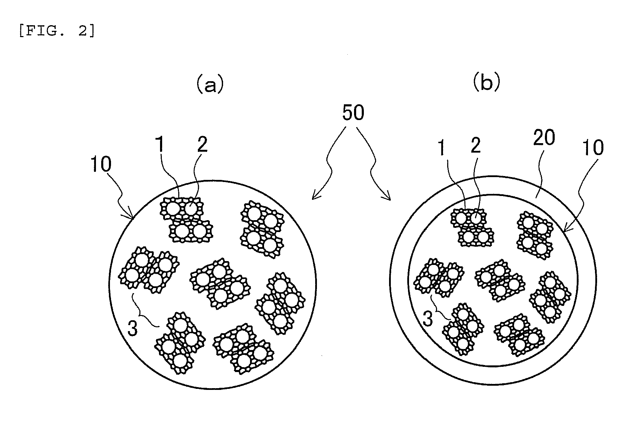

FIG. 2 is a diagram schematically showing the artificial soil particle 50 included in the artificial soil medium 100 of the present invention, particularly illustrating two different types of artificial soil particles 50. The artificial soil particle 50 of FIG. 2(a) is a first type artificial soil particle 50. The base 10 of the first type artificial soil particle 50 has a porous structure in which a plurality of fillers 1 are clustered together to form a particle. The first artificial soil particle 50 is configured to hold a nutrient (s) in the base 10. The nutrient in the base 10 is gradually released by being dissolved in water, etc., in the external environment, or by exchanging ions with hydrogen ions, etc. Alternatively, the base 10 may be configured to be disintegrable so that the nutrient is released due to the disintegration of the base 10. For example, the base 10 may be configured to disintegrate due to moisture supplied to a plant, a root acid secreted by roots during the growth of a plant, phosphoric acid as a nutrient held by the base 10, etc., or to be degraded by a microorganism existing in the artificial soil medium 100.

In the base 10, the fillers 1 do not necessarily need to be in contact with each other. If the fillers 1 maintain a relative positional relationship within a predetermined range in the particle with a binder, etc., being interposed between each filler, the fillers 1 are considered to be clustered together in the form of a particle. The filler 1 of the base 10 has a large number of small holes 2 extending from the surface to the inside. The small hole 2 is in various forms. For example, when the filler 1 is zeolite, a void which exists in the crystal structure of the zeolite is the small hole 2. When the filler 1 is hydrotalcite, an interlayer space which exists in the layered structure of the hydrotalcite is the small hole 2. In other words, the term "small hole" as used herein means a void, interlayer space, space, etc., that exist in the structure of the filler 1 and are not limited to "hole-like" forms. Note that a communication hole 3 ranging from the submicrometer to the submillimeter scale, which can hold moisture or nutrients, is formed between the fillers 1. The small holes 2 are distributed and arranged around the communication hole 3.

The small hole 2 of the filler 1 has a size ranging from the subnanometer to the submicrometer scale. For example, the size of the small hole 2 may be set to about 0.2 to 800 nm. When the filler 1 is zeolite, the size (diameter) of the void in the crystal structure of the zeolite is about 0.3 to 1.3 nm. When the filler 1 is hydrotalcite, the size (distance) of the interlayer space in the layered structure of the hydrotalcite is about 0.3 to 3.0 nm. Alternatively, the filler 1 may be formed of an organic porous material. In this case, the diameter of the small hole 2 is about 0.1 to 0.8 µm. The size of the small hole 2 of the filler 1 is measured using an optimum technique which is selected from gas adsorption, mercury intrusion, small-angle X-ray scattering, image processing, etc., and a combination thereof, depending on the state of an object to be measured.

Incidentally, the surface of natural soil is charged by negative ions, and therefore, can hold nutrients which are dissolved in water to exist as positive ions (i.e., natural soil has fertilizer retentivity). However, the surface of artificial soil is not charged by negative ions, and therefore, artificial soil itself does not have fertilizer retentivity. Therefore, even when a fertilizer, etc., is added to artificial soil, nutrients cannot be held, and flow out. Therefore, in the artificial soil medium 100 of the present invention, the filler 1 is preferably formed of a material having ion exchange capability so that the artificial soil particle 50 has sufficient fertilizer retentivity.

The material having ion exchange capability may be a material having cation exchange capability, a material having anion exchange capability, or a mixture thereof. Alternatively, a porous material (e.g., a polymeric foam material, glass foam material, etc.) which does not have ion exchange capability may be separately prepared, the above material having ion exchange capability may be introduced into the small holes of the porous material by injection, impregnation, etc., and the resultant material may be used as the filler 1. Examples of the material having cation exchange capability include cation exchange minerals, humus, and cation exchange resins. Examples of the material having anion exchange capability include anion exchange minerals and anion exchange resins.

Examples of the cation exchange minerals include smectite minerals such as montmorillonite, bentonite, beidellite, hectorite, saponite, stevensite, etc., mica minerals, vermiculite, zeolite, etc. Examples of the cation exchange resins include weakly acidic cation exchange resins and strongly acidic cation exchange resins. Of them, zeolite or bentonite is preferable. The cation exchange minerals and the cation exchange resins may be used in combination. The cation exchange capacity of the cation exchange mineral and cation exchange resin is set to 10 to 700 meq/100 g, preferably 20 to 700 meq/100 g, and more preferably 30 to 700 meq/100 g. When the cation exchange capacity is less than 10 meq/100 g, sufficient nutrients cannot be taken in, and nutrients taken in are likely to flow out quickly due to watering, etc. On the other hand, even when the cation exchange capacity exceeds 700 meq/100 g, the fertilizer retentivity is not significantly improved, which is not cost-effective.

Examples of the anion exchange minerals include natural layered double hydroxides, having a double hydroxide as a main framework, such as hydrotalcite, manasseite, pyroaurite, sjogrenite, patina, etc., synthetic hydrotalcite and hydrotalcite-like substances, and clay minerals such as allophane, imogolite, kaolinite, etc. Examples of the anion exchange resins include weakly basic anion exchange resins and strongly basic anion exchange resins. Of them, hydrotalcite is preferable. The anion exchange minerals and the anion exchange resins may be used in combination. The anion exchange capacity of the anion exchange mineral and anion exchange resin is set to 5 to 500 meq/100 g, preferably 20 to 500 meq/100 g, and more preferably 30 to 500 meq/100 g. When the anion exchange capacity is less than 5 meq/100 g, sufficient nutrients cannot be taken in, and nutrients taken in are likely to flow out quickly due to watering, etc. On the other hand, even when the anion exchange capacity exceeds 500 meq/100 g, the fertilizer retentivity is not significantly improved, which is not cost-effective.

When the filler 1 is formed of a natural inorganic mineral such as zeolite or hydrotalcite, the fillers 1 may be clustered together in the form of a particle using a binder. The particulate base 10 may be formed using a binder as follows: a binder, solvent, etc., are added to the fillers 1, followed by mixing, and the mixture is introduced into a granulation machine, followed by a known granulation technique such as tumbling granulation, fluidized bed granulation, agitation granulation, compression granulation, extrusion granulation, pulverization granulation, melting granulation, spraying granulation, etc. Alternatively, a binder and optionally a solvent, etc., may be added to the fillers 1, followed by kneading, the mixture may be dried into a block, and the block may be appropriately pulverized using a pulverization means such as a mortar and a pestle, hammer mill, roll crusher, etc., to form the base 10. The base 10 is optionally dried and classified to obtain an artificial soil particle 50. The particle size of the artificial soil particle 50 is preferably within the range of 0.2 to 10 mm.

When the artificial soil particle 50 is produced, a fertilizer component is added to a material mixture for granulation in order to introduce the fertilizer component into the base 10 of the artificial soil particle 50. Alternatively, as another technique of introducing a fertilizer component into the base 10 of the artificial soil particle 50, the artificial soil particle 50 may be produced using the filler 1 having the ability to adsorb ions, and thereafter, the artificial soil particle 50 may be immersed in a solution containing the fertilizer component so that the fertilizer component is introduced into the base 10 of the artificial soil particle 50. Specifically, the fertilizer component introduced into the base 10 is held by the binding force of the binder in the communication hole 3 formed between the fillers 1, or is adsorbed as ions by the filler 1 having the ion adsorbing capability. A portion of the fertilizer component held by the communication hole 3 and the filler 1 is dissolved in water, a root acid, etc., existing in the external environment, or the fertilizer component adsorbed by the filler 1 is dissolved, so that the fertilizer component is released into the external environment to be available for a plant. An extra amount of the fertilizer component is held by the small holes 2 distributed and arranged around the communication hole 3. Therefore, only a minimum amount of the fertilizer component flows out of the artificial soil particle 50 into the external environment. Examples of the fertilizer component introduced into the base 10 of the artificial soil particle 50 include three primary elements, i.e., nitrogen, phosphorus, and potassium, secondary elements, i.e., magnesium, calcium, and sulfur, and trace elements, i.e., iron, copper, zinc, manganese, molybdenum, boron, chlorine, and silicate. The amount of the fertilizer component added is preferably 0.01 to 10 parts by weight with respect to 1 part by weight of the filler 1.

In the production of the artificial soil particle 50, the ability of the artificial soil particle 50 as a final product to disintegrate (disintegrability) can be controlled by appropriately setting the type and amount of a binder which is mixed with the filler 1 and the fertilizer component for granulation. For example, if a water-soluble resin or acid degradable resin is used as the binder, the water-soluble resin or acid degradable resin is gradually dissolved or degraded by water supplied to a plant, a root acid secreted by roots during the growth of a plant, a nutrient such as phosphoric acid, etc., held by the artificial soil particle 50, etc., whereby the artificial soil particle 50 can be disintegrated. The root acid secreted during the growth of a plant includes citric acid as a main component, and therefore, the water-soluble resin used is preferably one which is easily degraded and dissolved in citric acid. The artificial soil particle 50 thus configured is easily disintegrated by citric acid produced by a plant, the fertilizer component can be released according to a growth stage of a plant. Also, if a biodegradable resin is used as the binder, the artificial soil particle 50 can be gradually disintegrated by the action of a microorganism, etc. The disintegrability of the artificial soil particle 50 can be controlled by changing the amount of the binder added. Also, if the binder is used to reinforce the inside of the base 10, the disintegrability of the artificial soil particle 50 can be finely controlled.

The binder may be either an organic binder or an inorganic binder. Examples of the organic binder include: modified cellulose binders such as ethyl cellulose, etc.; synthetic resin binders such as polyolefin binders, polyvinyl alcohol binders, polyurethane binders, vinyl acetate binders (e.g., vinyl acetate, ethylene-vinyl acetate, etc.), urethane resin binders (e.g., urethane resins, vinyl urethane resins, etc.), acrylic resin binders, silicone resin binders, etc., and naturally-occurring binders such as polysaccharides (e.g., starch, carrageenan, xanthan gum, gellan gum, alginic acid, etc.), proteins (e.g., polyamino acids, animal glue, etc.), etc. Examples of the inorganic binder include silicate binders such as water glass, etc., phosphate binders such as aluminum phosphate, etc., borate binders such as aluminum borate, etc., and hydraulic binders such as cement, etc. The organic and inorganic binders may be used in combination.

Examples of the binder which is used to cause the base 10 to be disintegrable include water-soluble resins, biodegradable resins, and acid degradable resins. The biodegradable resins may be those which are degraded directly or indirectly by a microorganism in nature. Examples of the biodegradable resin include: microorganism-produced resins typified by bacterial cellulose, etc.; naturally-occurring polymer resins such as polyamino acids, polyglutamic acid, polylysine, starch, cellulose, chitin and chitosan, carrageenan, alginates, gum arabic, pectin, locust bean gum, casein, gluten, collagen, curdlan, pullulan, dextran, gelatin, lignin, xanthan gum, proteins, polysaccharides, nucleic acid, tara gum, guar gum, tamarind seed gum, psyllium seed gum, hyaluronic acid, polyhydroxyalkanoates, modified starches, etc.; chemical synthetic resins such as polycaprolactone, polylactic acid, polyglycol acid, modified polyvinyl alcohol, polyethylene terephthalate copolymers, etc.; etc. These resins may be used alone or in combination.

The acid degradable resins may be those which are degraded by an acid. In particular, those which are degraded by citric acid, which is a component of a root acid, or phosphoric acid, which is a fertilizer component. Examples of the acid degradable resins include: naturally-occurring polymer resins such as alginates, carrageenan, pectin, gum arabic, carboxymethyl cellulose salts, etc.; synthetic polymer resins such as polyamides, acetal resins, vinylidene chloride resins, etc.; etc. These resins may be used alone or in combination.

The water-soluble resins may be those which are soluble in water, acidic water, or alkaline water, and are not toxic to plants. The water-soluble resins include the above biodegradable resins and acid degradable resins. Examples of the water-soluble resins include: naturally-occurring polymer resins such as starch cellulose, pectin, agar, alginates, xanthan gum, locust bean gum, tara gum, psyllium seed gum, gum arabic, gum tragacanth, Abelmoschus manihot, konjac, animal glue, casein, gelatin, albumen, pullulan, dextran, etc.; semisynthetic polymer resins such as soluble starch, carboxyl starch, dialdehyde starch, cationic starch, polyethers, polymalic acid, dextrin, viscose, methyl cellulose, ethyl cellulose, carboxylmethyl cellulose, hydroxyethyl cellulose, modified starches, oxidized starch, polylactic acid, etc.; synthetic polymer resins such as polyvinyl alcohol, polyethylene glycol, polypropylene glycol, polyacrylamide, acrylic resins, vinyl acetate resins, urea resin, urethane resins, polyvinylamine, poly(N-vinylpyrrolidone), polyvinyl ethers, polyethylene oxide, maleic anhydride, polymaleic acid copolymers, polyethyleneimine, polyalkylene oxide, polyvinyl sulfonate, polyvinyl ammonium, polystyrene, polystyrene sulfonate, polymethacrylic acid, polyamines, polyimines, polybetaines, polyamides, etc.; inorganic polymer resins such as poly(sodium phosphate), etc.; etc. Agar, alginates, polyvinyl alcohol, polyethylene glycol, vinyl acetate, and polyalkylene oxide are preferable. These resins may be used alone or in combination.

As the water-soluble resins which are soluble in acidic water, preferable are starch, cellulose, pectin, gelatin, agar, alginates, carrageenan, xanthan gum, locust bean gum, tara gum, psyllium seed gum, dextrin, polyamides, urea resin, urethane resins, polystyrene, polyvinyl alcohol, polyacrylic acids, polyacrylamide, polyethyleneimine, polyalkylene oxide, polyethylene glycol, methyl cellulose, carboxymethyl cellulose, hydroxyethyl cellulose, modified starches, oxidized starch, etc. Those which are soluble in citric acid, which is a component of a root acid, is particularly preferable.

When the filler 1 is formed of an organic porous material, the base 10 may be formed using a technique similar to the above granulation technique of the filler 1 using a binder. Alternatively, the base 10 may be formed as follows: the fillers 1 are heated to a temperature which is higher than or equal to the melting point of the organic porous material (a polymeric material, etc.) included in the filler 1 so that surfaces of the fillers 1 are bonded together by thermal fusion bonding to form a particle. In this case, a particle in which a plurality of the fillers 1 are clustered together can be obtained without using a binder. Examples of such an organic porous material include an organic polymeric foam material which is a foam of an organic polymeric material such as polyethylene, polypropylene, polyurethanes, polyvinyl alcohol, cellulose, etc., and an organic polymer porous product having open-cell foam structure which is formed by melting powder of the organic polymeric material by heating. The fertilizer component may be introduced into the base 10 using a technique similar to the above fertilizer component introduction technique.

The base 10 may be formed using a gelling reaction of a polymeric gelling agent. Examples of the gelling reaction of a polymeric gelling agent include a gelling reaction between an alginate, propylene glycol alginate ester, gellan gum, glucomannan, pectin, or carboxymethyl cellulose (CMC), and a multivalent metal ion, and a gelling reaction caused by a double helix structure forming reaction of a polysaccharide such as carrageenan, agar, xanthan gum, locust bean gum, tara gum, etc. Of them, a gelling reaction between an alginate and a multivalent metal ion will be described. For example, sodium alginate, which is an alginate, is a neutral salt formed by the carboxyl group of alginic acid bonding with a Na ion. While alginic acid is insoluble in water, sodium alginate is water-soluble. When an aqueous solution of sodium alginate is added to an aqueous solution containing a multivalent metal ion (e.g., a Ca ion), sodium alginate molecules are ionically cross-linked together to form a gel. In this embodiment, the gelling reaction may be performed by the following steps. Initially, an alginate is dissolved in water to formulate an aqueous solution of the alginate, and the filler 1 is added to the aqueous alginate solution, followed by thorough stirring, to form a mixture solution which is the aqueous alginate solution in which the fillers 1 are dispersed. Next, the mixture solution is dropped into an aqueous solution of a multivalent metal ion, thereby gelling the alginate contained in the mixture solution into particles. Thereafter, the gelled particles are collected, followed by washing with water and then thorough drying. As a result, the base 10 is obtained which is a particle formed of an alginate gel including an alginate and a multivalent metal ion, in which the fillers 1 are dispersed. As to the introduction of the fertilizer component, the fertilizer component may be mixed with the aqueous alginic acid solution before the gelling reaction, or alternatively, the gelled product as the base 10 may be formed and then immersed in a solution of the fertilizer component so that the fertilizer component is held by the base 10.

Examples of an alginate which can be used in the gelling reaction include sodium alginate, potassium alginate, and ammonium alginate. These alginates may be used in combination. The concentration of the aqueous alginate solution is 0.1 to 5% by weight, preferably 0.2 to 5% by weight, and more preferably 0.2 to 3% by weight. When the concentration of the aqueous alginate solution is less than 0.1% by weight, the gelling reaction is less likely to occur. When the concentration of the aqueous alginate solution exceeds 5% by weight, the viscosity of the aqueous alginate solution is excessively high, and therefore, it is difficult to stir the mixture solution containing the filler 1 added, and drop the mixture solution to the aqueous multivalent metal ion solution.

The aqueous multivalent metal ion solution to which the aqueous alginate solution is dropped may be any aqueous solution of a divalent or higher-valent metal ion which reacts with the alginate to form a gel. Examples of such an aqueous multivalent metal ion solution include an aqueous solution of a multivalent metal chloride such as calcium chloride, barium chloride, strontium chloride, nickel chloride, aluminum chloride, iron chloride, cobalt chloride, etc., an aqueous solution of a multivalent metal nitrate such as calcium nitrate, barium nitrate, aluminum nitrate, iron nitrate, copper nitrate, cobalt nitrate, etc., an aqueous solution of a multivalent metal lactate such as calcium lactate, barium lactate, aluminum lactate, zinc lactate, etc., and an aqueous solution of a multivalent metal sulfate such as aluminum sulfate, zinc sulfate, cobalt sulfate, etc. These aqueous multivalent metal ion solutions may be used in combination. The concentration of the aqueous multivalent metal ion solution is 1 to 20% by weight, preferably 2 to 15% by weight, and more preferably 3 to 10% by weight. When the concentration of the aqueous multivalent metal ion solution is less than 1% by weight, the gelling reaction is less likely to occur. When the concentration of the aqueous multivalent metal ion solution exceeds 20% by weight, it takes a long time to dissolve the metal salt, and an excessive amount of the material is required, which is not cost-effective.

The disintegrability of the artificial soil particle 50 produced by the alginate gelling reaction can be controlled by adjusting the drying temperature, drying technique, alginate concentration, alginate viscosity, or multivalent metal ion concentration, for example. For example, in order to the disintegrability of the artificial soil particle 50, conditions for production of the artificial soil particle 50 are set as follows.
(1) The temperature at which the particle is dried is set to 110 to 150°C.
(2) The particle is dried by freeze-drying instead of heat drying.
(3) The alginate concentration is set to be no more than 0.2 to 1.0% by weight during production of the particle.
(4) The alginate viscosity is set to be 300 cps or less during production of the particle.
(5) The concentration of the aqueous multivalent metal ion solution is set to be 4% or less during production of the particle.
(6) A bubble structure is formed in the base 10 using a closed-cell foam material such as a microballoon, etc., as the filler 1, during production of the particle.
(7) The particle is immersed in a low-concentration phosphoric acid solution (e.g., 2% solution) for a predetermined period of time.

### (Second Artificial Soil Particle)

FIG. 2(b) shows a second type artificial soil particle 50 including a base 10 and a cover layer 20 which has nutrient release characteristics. The base 10 of the second artificial soil particle 50 has a material and structure similar to those of the base 10 of the first artificial soil particle 50 of FIG. 2(a). Therefore, the base 10 of the second artificial soil particle 50 will not be described in detail.

The cover layer 20 is formed on an outer surface portion of the base 10. The cover layer 20 is used to control release of a nutrient (s) held by the base 10. For example, the cover layer 20 may be configured to gradually degrade so that a nutrient is released. Alternatively, a micropore through which a nutrient can be passed may be formed in the cover layer 20 so that the nutrient is gradually released. These configurations may be combined. The cover layer 20 may be formed on the outer surface portion of the base 10 by the following technique, for example. Initially, the particulate base 10 is placed in a container. Water is added to the container, where the volume of the water is about half the volume (occupied volume) of the base 10, so that the water is caused to permeate the base 10. Next, the base 10 is placed in a solution in which a resin for covering the base 10 is dissolved or a colloid solution containing such a resin (resin solution), followed by stirring for a predetermined period of time, so that the resin is uniformly attached to the surface of the base 10. The resin solution may be mixed with an additive such as a pigment, aroma chemical, fungicide, antimicrobial, air freshener, insecticide, etc. Thereafter, the resin attached to the outer surface portion of the base 10 is melted to fuse with the fillers 1 in the vicinity of the outer surface portion of the base 10, so that the cover layer 20 is formed. As a result, the production of the second artificial soil particle 50 in which the outer surface portion of the base 10 is covered by the cover layer 20 is completed. In this technique, the base 10 is impregnated with a resin solution. Therefore, by adjusting the type and concentration of the resin in the resin solution, a characteristic of the cover layer 20 formed on the outer surface portion of the base 10 can be changed. As a result, nutrient release characteristics of the artificial soil particle 50 can be adjusted. Also, by adjusting the concentration of the resin solution and the temperature of heating for melting the resin, the structure of the micropore formed in the cover layer 20 can be controlled. The artificial soil particle 50 thus obtained is optionally dried and classify so that the particle size is adjusted. The cover layer 20 has a thickness of 10 nm to 1 mm, preferably 20 nm to 500 µm, and more preferably 30 nm to 200 µm.

The resin which can be used in the cover layer 20 may be any one that can be used to control release of a nutrient held by the base 10 into the external environment, and is preferably a biodegradable resin, acid degradable resin, and water-soluble resin. The same biodegradable resin, acid degradable resin, and water-soluble resin as those used as a binder in the first artificial soil particle 50, can be employed. For example, when a synthetic polymer resin such as polyethylene glycol, a vinyl acetate resin, polyvinyl alcohol, etc., is used as the water-soluble resin, the concentration of the water-soluble resin is adjusted so that the cover layer 20 is dissolved by watering, a root acid, and phosphoric acid as a nutrient, etc. Also, when a biodegradable resin such as starch, an alginate, polylactic acid, etc., is used as the water-soluble resin, the composition of the water-soluble resin is adjusted so that the cover layer 20 is gradually degraded by the action of a microorganism, etc. By allowing the cover layer 20 formed of the water-soluble resin to be degraded at a desired timing, a nutrient held by the artificial soil particle 50 can be released at a time and in an amount which are required by a plant to be grown.

The plurality of types of artificial soil particles 50 included in the artificial soil medium 100 of the present invention are set to have different nutrient release characteristics. The different nutrient release characteristics can be imparted to the different artificial soil particles 50 by using resins (the above water-soluble resins, biodegradable resins, and acid degradable resins) having different degradation characteristics in the base 10 and the cover layer 20. The first artificial soil particle 50 without a cover layer shown in FIG. 2(a) releases a nutrient during an initial plant growing period (from a seedling period to an early stage of the growth period) (initial release). Also, in the second artificial soil particle 50 having the cover layer 20 shown in FIG. 2(b), if the cover layer 20 is, for example, formed of a resin which is highly water-soluble (highly water-soluble resin), the cover layer 20 begins degrading during an early stage of the plant growth period, and therefore, a nutrient is released during an intermediate plant growing period (from an early stage of the growth period to an early stage of the maturation period). If the cover layer 20 is formed of a resin which is lowly water-soluble (lowly water-soluble resin), the cover layer 20 begins degrading during a late stage of the plant growth period, and therefore, a nutrient is released during a late plant growing period (from a late stage of the growth period to the maturation period) (late release). Nutrient release characteristics have a close relationship with the disintegrability of the artificial soil particle 50. Therefore, the disintegrability of the artificial soil particle 50 will be described while illustrating a first to a fifth embodiment below. Note that, as used herein, the artificial soil particle 50 which disintegrates during an initial plant growing period is defined as being easily disintegrabile, and the artificial soil particle 50 which disintegrates during a late plant growing period is defined as being hardly disintegrable.

### (First Embodiment)

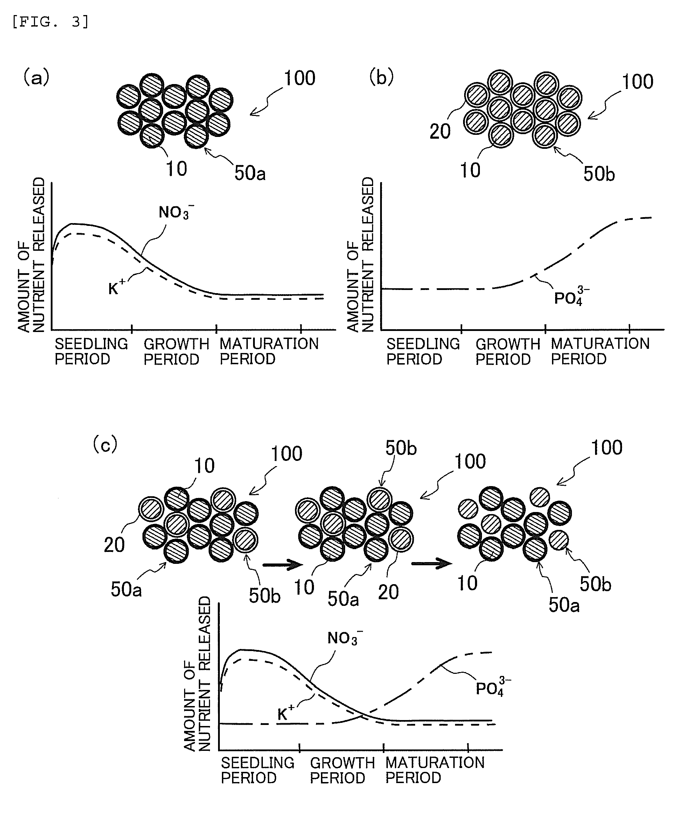

FIG. 3 is a diagram for describing an artificial soil medium 100 according to a first embodiment of the present invention. FIGS. 3(a) and 3(b) are schematic diagrams of the artificial soil media 100 including different artificial soil particles 50a and 50b having different nutrient release characteristics, and graphs of the nutrient release characteristics of the artificial soil particles 50a and 50b of the artificial soil media 100. The base 10 included in each of the artificial soil particles 50a and 50b has the configuration of FIG. 2(a), which is not shown in FIG. 3. FIG. 3(c) shows a transition diagram of the artificial soil medium 100 during the course of growth of a plant planted in a case where the artificial soil particles 50a and 50b of FIGS. 3(a) and 3(b) are mixed, and a graph of the nutrient release characteristics of the artificial soil medium 100. The vertical axis of the graph represents the amount of a nutrient(s) released, and the horizontal axis represents the period of time during which a planted plant is grown. The artificial soil particles 50 of this embodiment include the first artificial soil particle which does not have a cover layer and the second artificial soil particle which has the cover layer 20, which include different fillers 1 having different ion exchange capabilities in the respective bases 10.

In the artificial soil particle 50a, the filler 1 of the base 10 is caused to hold K⁺ and NO₃⁻ using zeolite and hydrotalcite, and the base 10 is formed by granulation using a water-insoluble synthetic resin as a binder or gelling using a polymeric gelling agent so that the base 10 does not disintegrate. In the artificial soil particle 50a, the base 10 is not covered by a cover layer, and therefore, as shown in the graph of FIG. 3(a), nutrients (K⁺ and NO₃⁻) held in the base 10 are released during an initial plant growing period (initial release). The artificial soil particle 50a releases a large amount of the nutrients during an initial plant growing period, and because the base 10 does not integrate, the remaining nutrients are gradually released until a late stage of the plant growth period. Also, the filler 1 of the artificial soil particle 50a is formed of zeolite and hydrotalcite, and therefore, when a nutrient such as potassium, nitrate nitrogen, etc., is externally added, the filler 1 having ion exchange capability can be caused to ionically adsorb the nutrient so that the nutrient is held in the small hole 2. In the case of natural soil, which does not have anion exchange capability, nitrate nitrogen typically flows out due to watering, etc. In contrast, the artificial soil medium 100 of this embodiment can also hold nitrate nitrogen.

In the artificial soil particle 50b, the filler 1 of the base 10 is caused to hold PO₄³⁻ using hydrotalcite, and the base 10 is formed by granulation using a water-insoluble synthetic resin as a binder or gelling using a polymeric gelling agent so that the base 10 does not disintegrate, and moreover, the base 10 is covered with a lowly water-soluble resin which forms the cover layer 20. In the artificial soil particle 50b, the base 10 is covered with the lowly water-soluble resin, and therefore, it takes a long time for the cover layer 20 to be degraded. As shown in the graph of FIG. 3(b), the cover layer 20 begins degrading during a late stage of the plant growth period, and releases the nutrient (PO₄³⁻) into the external environment during a late plant growing period (late release). In the artificial soil particle 50b, even when the cover layer 20 is degraded, the base 10 does not disintegrate, and therefore, the nutrient is gradually released.

FIG. 3(c) shows the artificial soil medium 100 including a mixture of the artificial soil particles 50. As shown in the graph of FIG. 3(c), the mixture of the artificial soil particles 50a and 50b releases nitrate nitrogen and potassium during an initial plant growing period to promote the growth of a plant, and releases phosphoric acid during a late plant growing period to accelerate the growth of a plant. Note that the amounts of the nutrients released can be optimized for a plant to be grown by appropriately adjusting the mixture ratio of the artificial soil particles 50a and 50b. Therefore, in the artificial soil medium 100, the appropriate timing and amount of a nutrient(s) supplied can be highly controlled, depending on a plant to be grown.

### (Second Embodiment)

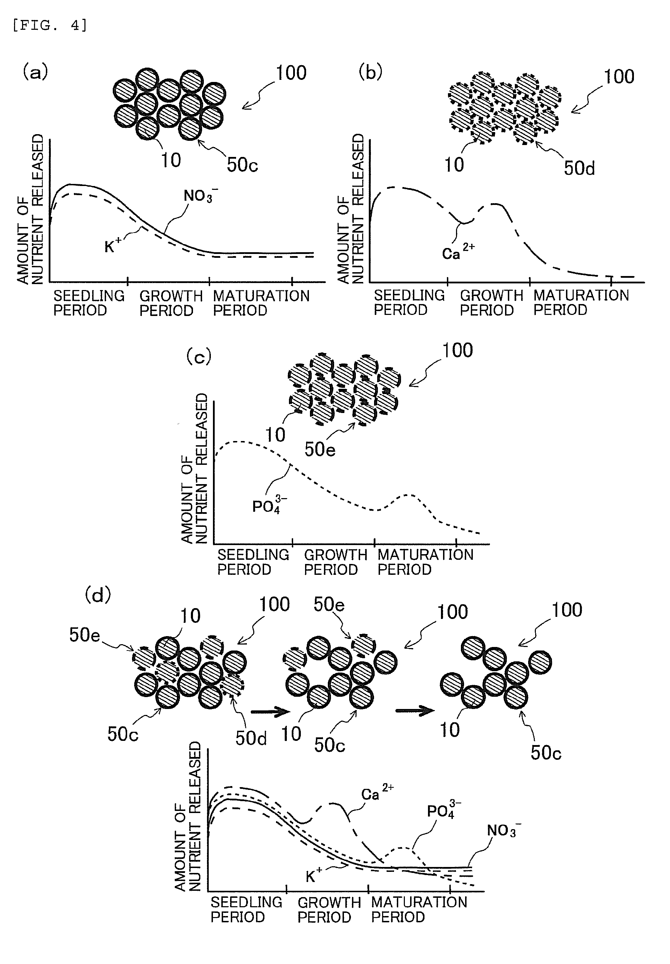

FIG. 4 is a diagram for describing an artificial soil medium 100 according to a second embodiment of the present invention. FIGS. 4(a) to 4(c) are schematic diagrams of the artificial soil media 100 including different artificial soil particles 50c, 50d, and 50e having different nutrient release characteristics, and graphs of the nutrient release characteristics of the artificial soil media 100. The configuration of the base 10 of each of the artificial soil particles 50c, 50d, and 50e is the same as that shown in FIG. 2(a), and therefore, is not shown in FIG. 4. FIG. 4(d) shows a transition diagram of the artificial soil medium 100 during the course of growth of a plant planted in a case where the artificial soil medium 100 includes a mixture of the artificial soil particles 50c, 50d, and 50e of FIGS. 4(a) to 4(c), and a graph showing the nutrient release characteristics of the artificial soil medium 100. In the graph, the vertical axis represents the amount of a nutrient(s) released, and the horizontal axis represents the period of time during which a plant is grown. The artificial soil particles 50 of this embodiment include only the first artificial soil particle 50 which does not have a cover layer. The bases 10 of the artificial soil particles 50c, 50d, and 50e include different fillers 1 having different ion exchange capabilities.

In the artificial soil particle 50c, the filler 1 of the base 10 is caused to hold K⁺ and NO₃⁻ using zeolite and hydrotalcite, and the base 10 is formed by granulation using a water-insoluble synthetic resin as a binder or gelling using a polymeric gelling agent so that the base does not disintegrate. In the artificial soil particle 50c, the base 10 is not covered by a cover layer, and therefore, as shown in the graph of FIG. 4(a), the initial release of the nutrients (K⁺ and NO₃⁻) held in the base 10 begins. The artificial soil particle 50c releases a large amount of the nutrients during an initial plant growing period, and because the base 10 does not disintegrate, the remaining nutrients are gradually released until a late stage of the plant growth period. Also, because the filler 1 of the artificial soil particle 50c is formed of zeolite and hydrotalcite, therefore, when a nutrient such as potassium, nitrate nitrogen, etc., is externally added, the filler 1 having ion exchange capability can be caused to ionically adsorb the nutrient so that the nutrient is held in the small hole 2. In the case of natural soil, which does not have anion exchange capability, nitrate nitrogen typically flows out due to watering, etc. In contrast, the artificial soil medium 100 of this embodiment can also hold nitrate nitrogen.

In the artificial soil particle 50d, the filler 1 of the base 10 is caused to hold Ca²⁺ using zeolite, and the base 10 is formed by granulation using a highly water-soluble resin as a binder, gelling using a polymeric gelling agent having an adjusted concentration, etc., so that the base 10 is easily disintegrable. As shown in the graph of FIG. 4(b), in the artificial soil particle 50d, the base 10 is not covered by a cover layer, and therefore, the initial release of the nutrient (Ca²⁺) begins, and moreover, because the base 10 is easily disintegrable, the artificial soil particle 50d disintegrates during an early stage of the plant growth period, and the remaining nutrient is released into the external environment during the plant growth period.

In the artificial soil particle 50e, the filler 1 of the base 10 is caused to hold PO₄³⁻ using hydrotalcite, and the base 10 is formed by granulation using a lowly water-soluble resin as a binder, gelling using a polymeric gelling agent having an adjusted concentration, etc., so that the base 10 is hardly disintegrable. As shown in the graph of FIG. 4(c), in the artificial soil particle 50e, the base 10 is not covered by a cover layer, and therefore, the initial release of the nutrient (PO₄³⁻) begins, and moreover, because the base 10 is hardly disintegrable, the artificial soil particle 50e disintegrates during a late stage of the plant growth period, and the remaining nutrient is released into the external environment during the plant maturation period.

FIG. 4(d) shows the artificial soil medium 100 including a mixture of the artificial soil particles 50. As shown in the graph of FIG. 4(d), the mixture of the artificial soil particles 50c, 50d, and 50e releases nitrate nitrogen, potassium, calcium, and phosphoric acid during an initial plant growing period to promote the growth of a plant. Also, the mixture of the artificial soil particles 50c, 50d, and 50e increases the amount of calcium released during the plant growth period, and the amount of phosphoric acid released during the plant maturation period, to accelerate the growth of a plant. Note that the amounts of the nutrients released can be optimized for a plant to be grown by appropriately adjusting the mixture ratio of the artificial soil particles 50c, 50d, and 50e. Therefore, in the artificial soil medium 100, the appropriate timing and amount of a nutrient(s) supplied can be highly controlled, depending on a plant to be grown. Also, the artificial soil particles 50d and 50e include a water-soluble resin which is mixed during granulation. Therefore, the timing of disintegration of the base 10 can be adjusted by changing the amount of watering to a plant.

### (Third Embodiment)

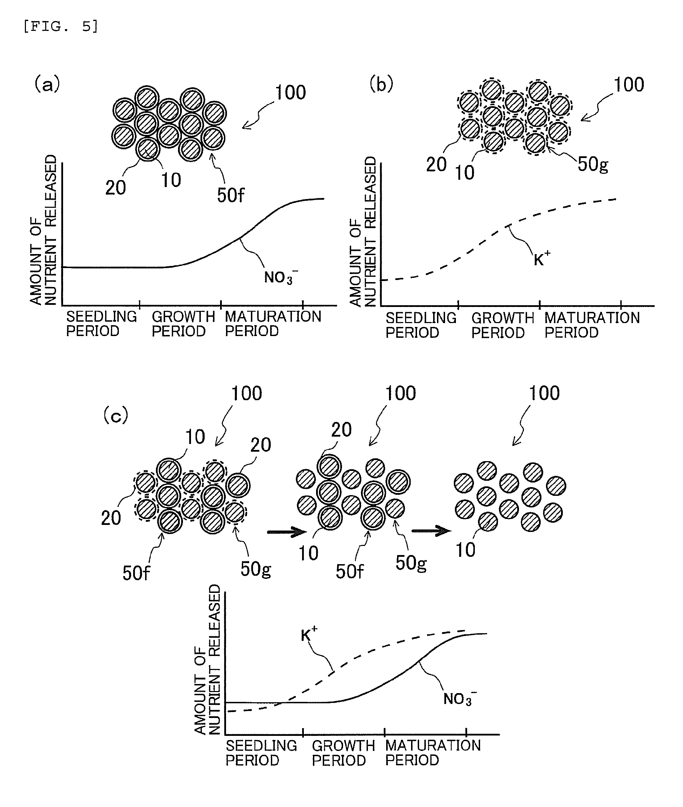

FIG. 5 is a diagram for describing an artificial soil medium 100 according to a third embodiment of the present invention. FIGS. 5(a) and 5(b) are schematic diagrams of the artificial soil media 100 including different artificial soil particles 50f and 50g having different nutrient release characteristics, and graphs showing the nutrient release characteristics of the artificial soil media 100. The configuration of the base 10 of each of the artificial soil particles 50f and 50g is the same as that shown in FIG. 2(a), and therefore, is not shown in FIG. 5. FIG. 5(c) shows a transition diagram of the artificial soil medium 100 during the course of growth of a planted plant in a case where the artificial soil medium 100 includes a mixture of the artificial soil particles 50f and 50g of FIGS. 5(a) and 5(b), and a graph showing the nutrient release characteristics of the artificial soil medium 100. In the graph, the vertical axis represents the amount of a nutrient(s) released, and the horizontal axis represents the period of time during which a plant is grown. The artificial soil particles 50 of this embodiment include only the second artificial soil particle 50 which has the cover layer 20. The bases 10 of the artificial soil particles 50f and 50g include different fillers 1 having different ion exchange capabilities, and are covered with different water-soluble resins having different properties which form the cover layers 20.

In the artificial soil particle 50f, the filler 1 of the base 10 is caused to hold NO₃⁻ using hydrotalcite, and the base 10 is formed by granulation using a water-insoluble synthetic resin as a binder or gelling using a polymeric gelling agent so that the base does not disintegrate, and moreover, the base 10 is covered with a lowly water-soluble resin which forms the cover layer 20. In the artificial soil particle 50f, the base 10 is covered with the lowly water-soluble resin, and therefore, it takes a long time for the cover layer 20 to be degraded. As shown in the graph of FIG. 5(a), the cover layer 20 begins degrading during a late stage of the plant growth period, so that the nutrient (NO₃⁻) begins late release. In the artificial soil particle 50f, even when the cover layer 20 is degraded, the base 10 does not disintegrate, and therefore, the nutrient is gradually released. Also, the filler 1 of the artificial soil particle 50f is formed of hydrotalcite, and therefore, when a nutrient such as nitrate nitrogen, etc., is externally added, the filler 1 having ion exchange capability can be caused to ionically adsorb the nutrient so that the nutrient is held in the small hole 2.

In the artificial soil particle 50g, the filler 1 of the base 10 is caused to hold K⁺ using zeolite, and the base 10 is formed by granulation using a water-insoluble synthetic resin as a binder or gelling using a polymeric gelling agent so that the base does not disintegrate, and moreover, the base 10 is covered with a highly water-soluble resin which forms the cover layer 20. In the artificial soil particle 50g, the base 10 is covered with the highly water-soluble resin, and therefore, the cover layer 20 is easily degraded by watering, a root acid, etc. Therefore, as shown in the graph of FIG. 5(b), the cover layer 20 begins degrading during an early stage of the plant growth period, so that the nutrient (K⁺) is released during an intermediate plant growing period (intermediate release). In the artificial soil particle 50g, even when the cover layer 20 is degraded, the base 10 does not disintegrate, and therefore, the nutrient is gradually released. Also, the filler 1 of the artificial soil particle 50g is formed of zeolite, and therefore, when a nutrient such as potassium, etc., is externally added, the filler 1 having ion exchange capability can be caused to ionically adsorb the nutrient so that the nutrient is held in the small hole 2.

FIG. 5(c) shows the artificial soil medium 100 including a mixture of the artificial soil particles 50. As shown in the graph of FIG. 5(c), the mixture of the artificial soil particles 50f and 50g releases potassium during an intermediate plant growing period, and releases nitrate nitrogen during a late plant growing period. Note that the amounts of the nutrients released can be optimized for a plant to be grown by appropriately adjusting the mixture ratio of the artificial soil particles 50f and 50g. Therefore, in the artificial soil medium 100, the appropriate timing and amount of a nutrient(s) supplied can be highly controlled, depending on a plant to be grown. In this embodiment, the nutrient release characteristics of the artificial soil particle 50 are adjusted by changing the rate of degradation of the cover layer 20. Alternatively, a micropore through which a nutrient can be passed may be formed in the cover layer 20, and the nutrient release characteristics may be adjusted by changing the size and number of the micropores.

### (Fourth Embodiment)

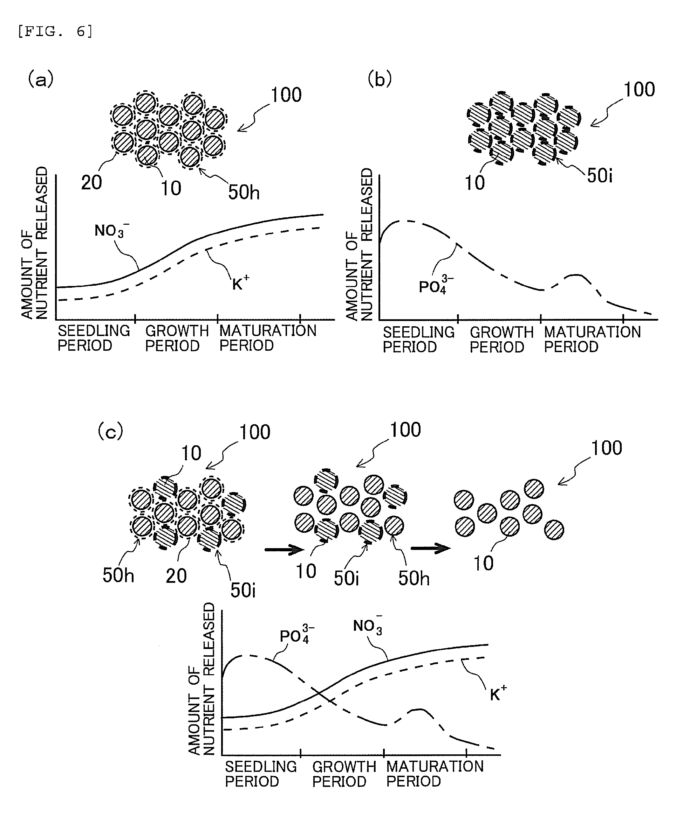

FIG. 6 is a diagram for describing an artificial soil medium 100 according to a fourth embodiment of the present invention. FIGS. 6(a) and 6(b) are schematic diagrams of the artificial soil media 100 including different artificial soil particles 50h and 50i having different nutrient release characteristics, and graphs showing the nutrient release characteristics of the artificial soil media 100. The configuration of the base 10 of each of the artificial soil particles 50h and 50i is the same as that shown in FIG. 2(a), and therefore, is not shown in FIG. 6. FIG. 6(c) shows a transition diagram of the artificial soil medium 100 during the course of growth of a planted plant in a case where the artificial soil medium 100 includes a mixture of the artificial soil particles 50h and 50i of FIGS. 6 (a) and 6(b), and a graph showing the nutrient release characteristics of the artificial soil medium 100. In the graph, the vertical axis represents the amount of a nutrient(s) released, and the horizontal axis represents the period of time during which a plant is grown. In this embodiment, the artificial soil particles 50h and 50i are the second artificial soil particle having the cover layer 20 which has the cover layer 20 and the first artificial soil particle which does not have a cover layer 20, respectively, and include different fillers 1 having different ion exchange capabilities in the respective bases 10.

In the artificial soil particle 50h, the filler 1 of the base 10 is caused to hold K⁺ and NO₃⁻ using zeolite and hydrotalcite, and the base 10 is formed by granulation using a water-insoluble synthetic resin as a binder or gelling using a polymeric gelling agent so that the base does not disintegrate, and moreover, the base 10 is covered with a highly water-soluble resin which forms the cover layer 20. In the artificial soil particle 50h, the base 10 is covered with the highly water-soluble resin, and therefore, the cover layer 20 is easily degraded by watering, a root acid, etc. Therefore, as shown in the graph of FIG. 6(a), the cover layer 20 begins degrading during an early stage of the plant growth period, and the intermediate release of the nutrients (K⁺ and NO₃⁻) begins. In the artificial soil particle 50h, even when the cover layer 20 is degraded, the base 10 does not disintegrate, and therefore, the nutrients are gradually released. Also, the filler 1 of the artificial soil particle 50h is formed of zeolite and hydrotalcite, and therefore, when a nutrient such as potassium, nitrate nitrogen, etc., is externally added, the filler 1 having ion exchange capability can be caused to ionically adsorb the nutrient so that the nutrient is held in the small hole 2.

In the artificial soil particle 50i, the filler 1 of the base 10 is caused to hold PO₄³⁻ using hydrotalcite, and the base 10 is formed by granulation using a lowly water-soluble resin as a binder, gelling using a polymeric gelling agent having an adjusted concentration, etc., so that the base 10 is hardly disintegrable. As shown in the graph of FIG. 6(b), in the artificial soil particle 50i, the base 10 is not covered by a cover layer, and therefore, the initial release of the nutrient (PO₄³⁻) begins, and moreover, because the base 10 is hardly disintegrable, the artificial soil particle 50i disintegrates during a late stage of the plant growth period, and the remaining nutrient is released into the external environment during the plant maturation period.

FIG. 6(c) shows the artificial soil medium 100 including a mixture of the artificial soil particles 50. As shown in the graph of FIG. 6(c), the mixture of the artificial soil particles 50h and 50i releases phosphoric acid during an initial plant growing period to promote the growth of a plant. The mixture of the artificial soil particles 50h and 50i also begins releasing nitrate nitrogen and potassium during an intermediate plant growing period, and increases the amount of phosphoric acid released during the plant maturation period, to accelerate the growth of a plant. Note that the amounts of the nutrients released can be optimized for a plant to be grown by appropriately adjusting the mixture ratio of the artificial soil particles 50h and 50i. Therefore, in the artificial soil medium 100, the appropriate timing and amount of a nutrient(s) supplied can be highly controlled, depending on a plant to be grown.

### (Fifth Embodiment)

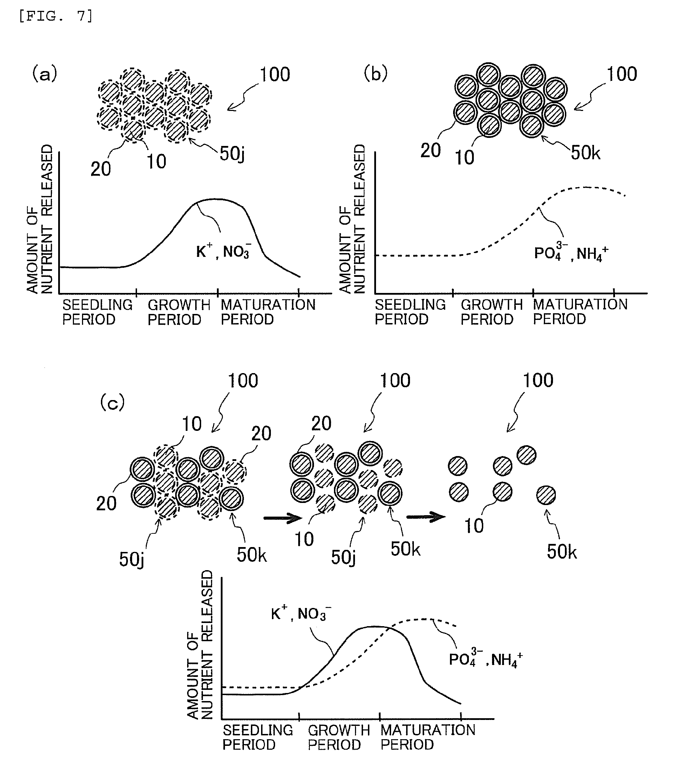

FIG. 7 is a diagram for describing an artificial soil medium 100 according to a fifth embodiment of the present invention. FIGS. 7(a) and 7(b) are schematic diagrams of the artificial soil media 100 including different artificial soil particles 50j and 50k having different nutrient release characteristics, and graphs showing the nutrient release characteristics of the artificial soil media 100. The configuration of the base 10 of each of the artificial soil particles 50j and 50k is the same as that shown in FIG. 2(a), and therefore, is not shown in FIG. 7. FIG. 7(c) shows a transition diagram of the artificial soil medium 100 during the course of growth of a planted plant in a case where the artificial soil medium 100 includes a mixture of the artificial soil particles 50j and 50k of FIGS. 7(a) and 7(b), and a graph showing the nutrient release characteristics of the artificial soil medium 100. In the graph, the vertical axis represents the amount of a nutrient(s) released, and the horizontal axis represents the period of time during which a plant is grown. The artificial soil particles 50 of this embodiment include only the second artificial soil particle 50 which has the cover layer 20. The bases 10 of the artificial soil particles 50j and 50k include different fillers 1 having different ion exchange capabilities, and are covered with different water-soluble resins having different properties which form the cover layers 20.

In the artificial soil particle 50j, the filler 1 of the base 10 is caused to hold KNO₃ using kaolin clay, and the base 10 is formed by granulation using a lowly water-soluble resin as a binder, gelling using a polymeric gelling agent having an adjusted concentration, etc., so that the base 10 is hardly disintegrable, and moreover, the base 10 is covered with a highly water-soluble resin which forms the cover layer 20. In the artificial soil particle 50j, the base 10 is covered with the highly water-soluble resin, and therefore, the cover layer 20 is easily degraded by watering, a root acid, etc. Therefore, as shown in the graph of FIG. 7(a), the cover layer 20 begins degrading during an early stage of the plant growth period, and the intermediate release of the nutrients (K⁺ and NO₃⁻) begins. Moreover, because the base 10 is hardly disintegrable, the artificial soil particle 50j disintegrates during a late stage of the plant growth period, and the remaining nutrients are released into the external environment during the plant maturation period.

In the artificial soil particle 50k, the filler 1 of the base 10 is caused to hold a nutrient (NH₄)₃PO₄ using kaolin clay, and the base 10 is formed by granulation using a water-insoluble synthetic resin as a binder or gelling using a polymeric gelling agent so that the base does not disintegrate, and moreover, the base 10 is covered with a lowly water-soluble resin which forms the cover layer 20. In the artificial soil particle 50k, the base 10 is covered with the lowly water-soluble resin, and therefore, it takes a long time for the cover layer 20 to be degraded. As shown in the graph of FIG. 7(b), the cover layer 20 begins degrading during a late stage of the plant growth period, and the late release of the nutrients (NH₄⁺, PO₄³⁻) begins. In the artificial soil particle 50k, even when the cover layer 20 is degraded, the base 10 does not disintegrate, and therefore, the nutrients are gradually released. Also, the fillers 1 of the artificial soil particles 50i and 50k are formed of kaolin clay, which does not have ion exchange capability. Therefore, as shown in the graph of FIG. 7(b), the rate of release of a nutrient is higher than when the filler 1 having ion exchange capability is used.

FIG. 7(c) shows the artificial soil medium 100 including a mixture of the artificial soil particles 50. As shown in the graph of FIG. 7(c), the mixture of the artificial soil particles 50j and 50k releases nitrate nitrogen and potassium during an intermediate plant growing period to promote the growth of a plant, and releases ammonia nitrogen and phosphoric acid during a late plant growing period to accelerate the growth of a plant. Note that the amounts of the nutrients released can be optimized for a plant to be grown by appropriately adjusting the mixture ratio of the artificial soil particles 50j and 50k. Therefore, in the artificial soil medium 100, the appropriate timing and amount of a nutrient(s) supplied can be highly controlled, depending on a plant to be grown. In the artificial soil particle 50 of this embodiment, the filler 1 does not include a material having ion exchange capability, and therefore, after the cover layer 20 is degraded, the amount of a nutrient released may be sharply increased, whereby the release period may be reduced.

### Examples

To evaluate the artificial soil medium of the present invention, artificial soil media including different artificial soil particles having different nutrient release characteristics were tested. The result of the test will now be described.

### <Production of Artificial Soil Particle>

### (1) Production of Particulate Material (the base of an artificial soil particle) (Examples 1 to 13 and Comparative Example)

Zeolite, which is a cation exchange mineral, hydrotalcite, which is an anion exchange mineral, or kaolin clay, which is a non-ion exchange mineral, were added as fillers to 0.5% aqueous sodium alginate solution, where the mixture ratio (parts by weight) was according to Tables 1 to 3 below, followed by stirring for 3 min using a mixer (SM-L57, manufactured by Sanyo Electric Co, Ltd.), to formulate a mixture solution. The mixture solution thus obtained was dropped into 5% aqueous calcium chloride solution, which is an aqueous multivalent metal ion solution, to produce a gelled product. The gelled product thus produced was collected from the solution and then washed, followed by drying using a drying machine at 55°C for 24 h, to produce particulate materials (the bases of artificial soil particles) of Examples 1 to 13, and an artificial soil particle of Comparative Example. In Example 12, the gelled product which was washed and then dried using a drying machine at 150°C for 24 h, was directly used as an artificial soil particle. In Example 13, the gelled product which was washed and then dried by freeze-drying, was directly used as an artificial soil particle. Although different drying techniques were used in Examples 12 and 13, both of the techniques provided an easily disintegrable base of an artificial soil particle. A nutrient(s) was introduced into an artificial soil particle as follows. When zeolite, which is a cation exchange mineral, or hydrotalcite, which is an anion exchange mineral, was used as a filler, the artificial soil particle was immersed in solutions of the respective fertilizer components, so that the fertilizer components were held by the fillers. When kaolin clay, which is a non-ion exchange mineral, was used as a filler, a fertilizer component(s) was added to an aqueous sodium alginate solution to formulate an artificial soil particle, in which the fertilizer component is held.

### (2) Formation of Cover Layer (Examples 1 to 11)

A cover layer was formed on an outer surface portion of a particulate material, where the mixture ratio (parts by weight) was according to Tables 1 to 3. A technique of forming a cover layer in each example will now be described.

Example 1: a particulate material was impregnated with an ethanol solution of 20% polyalkylene oxide (AQUACALK (registered trademark), manufactured by Sumitomo Seika Chemicals Co., Ltd.) as a resin for forming a cover layer at room temperature for 1 h, followed by drying at 80°C for 24 h, to produce an artificial soil particle (nutrient: PO₄³⁻) covered with polyalkylene oxide.

Example 2: a particulate material was impregnated with an aqueous solution of 20% polyethylene glycol (manufactured by Wako Pure Chemical Industries, Ltd., molecular weight: 2000) as a resin for forming a cover layer at room temperature for 1 h, followed by drying at 80°C for 24 h, to produce an artificial soil particle (nutrient: PO₄³⁻) covered with polyethylene glycol.

Example 3: a particulate material was impregnated with an aqueous solution of 40% polyvinyl alcohol (DENKA POVAL (registered trademark) K-05, manufactured by Denki Kagaku Kogyo Kabushiki Kaisha) as a resin for forming a cover layer at room temperature for 1 h, followed by drying at 80°C for 24 h, to produce an artificial soil particle (nutrient: PO₄³⁻) covered with polyvinyl alcohol.

Example 4: a particulate material was impregnated with an aqueous emulsion solution of 20% vinyl acetate (craft bond adhesive for fabric manufactured by Kawaguchi Co., Ltd.) as a resin for forming a cover layer at room temperature for 1 h, followed by drying at 80°C for 24 h, to produce an artificial soil particle (nutrient: PO₄³⁻) covered with vinyl acetate.

Example 5: a particulate material was impregnated with a solution of 1% agar (manufactured by Wako Pure Chemical Industries, Ltd.) as a resin for forming a cover layer at room temperature for 1 h, followed by drying at 80°C for 24 h, to produce an artificial soil particle (nutrient: PO₄³⁻) covered with agar.

Example 6: a particulate material was impregnated with an aqueous solution of 1% sodium alginate (manufactured by Wako Pure Chemical Industries, Ltd.) as a resin for forming a cover layer at room temperature for 1 h, and then immersed in 5% aqueous calcium chloride solution for gelling, followed by drying at 55°C for 24 h, to produce an artificial soil particle (nutrient: PO₄³⁻) covered with alginic acid.

Example 7: a particulate material was impregnated with an aqueous solution of 2% guluronate-rich alginic acid (KIMICA ALGIN I-3G, manufactured by Kimica Corporation) as a resin for forming a cover layer at room temperature for 1 h, and then immersed in 5% aqueous calcium chloride solution for gelling, followed by drying at 55°C for 24 h, to produce an artificial soil particle (nutrient: PO₄³⁻) covered with guluronate-rich alginic acid.

Example 8: (1) a particulate material was impregnated with an aqueous solution of 20% polyethylene glycol as a resin for forming a cover layer at room temperature for 1 h, followed by drying at 80°C for 24 h, to produce an artificial soil particle (nutrient: Ca²⁺) covered with polyethylene glycol. (2) A particulate material was impregnated with an aqueous solution of 40% polyvinyl alcohol as a resin for forming a cover layer at room temperature for 1 h, followed by drying at 80°C for 24 h, to produce an artificial soil particle (nutrient: PO₄³⁻) covered with polyvinyl alcohol.

Example 9: (1) a particulate material was impregnated with an aqueous solution of 20% polyethylene glycol as a resin for forming a cover layer at room temperature for 1 h, followed by drying at 80°C for 24 h, to produce an artificial soil particle (nutrient: K⁺) covered with polyethylene glycol. (2) A particulate material was impregnated with an aqueous solution of 40% polyvinyl alcohol as a resin for forming a cover layer at room temperature for 1 h, followed by drying at 80°C for 24 h, to produce an artificial soil particle (nutrient: NO₃⁻) covered with polyvinyl alcohol.

Example 10: (1) a particulate material was impregnated with an aqueous solution of 20% polyethylene glycol as a resin for forming a cover layer at room temperature for 1 h, followed by drying at 80°C for 24 h, to produce an artificial soil particle (nutrient: K⁺) covered with polyethylene glycol. (2) A particulate material was impregnated with an aqueous solution of 20% polyethylene glycol as a resin for forming a cover layer at room temperature for 1 h, followed by drying at 80°C for 24 h, to produce an artificial soil particle (nutrient: NO₃⁻) covered with polyethylene glycol. (3) A particulate material was impregnated with an aqueous solution of 40% polyvinyl alcohol as a resin for forming a cover layer at room temperature for 1 h, followed by drying at 80°C for 24 h, to produce an artificial soil particle (nutrient: PO₄³⁻) covered with polyvinyl alcohol.

Example 11: (1) a particulate material was impregnated with an aqueous solution of 20% polyethylene glycol as a resin for forming a cover layer at room temperature for 1 h, followed by drying at 80°C for 24 h, to produce an artificial soil particle (nutrients: K⁺, NO₃⁻) covered with polyethylene glycol. (2) A particulate material was impregnated with an aqueous solution of 40% polyvinyl alcohol as a resin for forming a cover layer at room temperature for 1 h, followed by drying at 80°C for 24 h, to produce an artificial soil particle (nutrients: NH₄⁺, PO₄³⁻) covered with polyvinyl alcohol.

**Table 1**

| Mixture components (parts by weight) | | Example 1 | | | Example 2 | | | Example 3 | | | Example 4 | | | Example 5 | | |
|---|---|---|---|---|---|---|---|---|---|---|---|---|---|---|---|---|
| With (Y) or without (N) cover layer | | N | N | Y | N | N | Y | N | N | Y | N | N | Y | N | N | Y |
| Nutrients held | | K⁺ | NO₃⁻ | PO₄³⁻ | K⁺ | NO₃⁻ | PO₄³⁻ | K⁺ | NO₃⁻ | PO₄³⁻ | K⁺ | NO₃⁻ | PO₄³⁻ | K⁺ | NO₃⁻ | PO₄³⁻ |
| Cation exchange mineral Zeolite | | 10 | | | 10 | | | 10 | | | 10 | | | 10 | | |
| Anion exchange mineral Hydrotalcite | | | 10 | 10 | | 10 | 10 | | 10 | 10 | | 10 | 10 | | 10 | 10 |
| Non-ion exchange mineral Kaolin clay | | | | | | | | | | | | | | | | |
| Aqueous solution of 0.5% sodium alginate | | 100 | 100 | 100 | 100 | 100 | 100 | 100 | 100 | 100 | 100 | 100 | 100 | 100 | 100 | 100 |
| Cross-linking agent | | 5% calcium chloride | | | 5% calcium chloride | | | 5% calcium chloride | | | 5% calcium chloride | | | 5% calcium chloride | | |
| Water-soluble resins | Ethanol solution of 20% polyalkylene oxide | | | Impreg nation | | | | | | | | | | | | |
| | Aqueous solution of 20% polyethylene glycol | | | | | | Impreg nation | | | | | | | | | |
| | Aqueous solution of 40% polyvinyl alcohol | | | | | | | | | Impreg nation | | | | | | |
| | Aqueous solution of 2% guluronate-rich alginic acid (soluble in phosphoric acid) | | | | | | | | | | | | | | | |
| | Aqueous emulsion solution of 20% vinyl acetate | | | | | | | | | | | | Impreg nation | | | |
| Biodegradable resin | Solution of 1% agar (80°C) | | | | | | | | | | | | | | | Impregn ation |
| Acid degradable resin | Aqueous solution of 1% sodium alginate | | | | | | | | | | | | | | | |
| Disintegrabil ity | Drying temperature: 150°C, 24 h | | | | | | | | | | | | | | | |
| | Freeze-drying | | | | | | | | | | | | | | | |

**Table 2**

| Mixture components (parts by weight) | | Example 6 | | | Example 7 | | | Example 8 | | | | Example 9 | | Example 10 | | |
|---|---|---|---|---|---|---|---|---|---|---|---|---|---|---|---|---|
| With (Y) or without (N) cover layer | | N | N | Y | N | N | Y | N | N | Y | Y | Y | Y | Y | Y | Y |
| Nutrients held | | K⁺ | NO₃⁻ | PO₄³⁻ | K⁺ | NO₃⁻ | PO₄³⁻ | K⁺ | NO₃⁻ | Ca²⁺ | PO₄³⁻ | K⁺ | NO₃⁻ | K⁺ | NO₃⁻ | PO₄³⁻ |
| Cation exchange mineral Zeolite | | 10 | | | 10 | | | 10 | | | | 10 | | 10 | | |
| Anion exchange mineral Hydrotalcite | | | 10 | 10 | | 10 | 10 | | | 10 | 10 | | 10 | | 10 | 10 |
| Non-ion exchange mineral Kaolin clay | | | | | | | | | | | | | | | | |
| Aqueous solution of 0.5% sodium alginate | | 100 | 100 | 100 | 100 | 100 | 100 | 100 | | 100 | 100 | 100 | 100 | 100 | 100 | 100 |
| Cross-linking agent | | 5% calcium chloride | | | 5% calcium chloride | | | 5% calcium chloride | | | | 5% calcium chloride | | 5% calcium chloride | | |
| Water-soluble resins | Ethanol solution of 20% polyalkylene oxide | | | | | | | | | | | | | | | |
| | Aqueous solution of 20% polyethylene glycol | | | | | | | | | Impre gnati on | | Impregnat ion | | Impre gnati on | Impre gnati on | |
| | Aqueous solution of 40% polyvinyl alcohol | | | | | | | | | | Impreg nation | | Impregna tion | | | Impreg nation |
| | Aqueous solution of 2% guluronate-rich alginic acid (soluble in phosphoric acid) | | | | | | Impreg nation | | | | | | | | | |
| | Aqueous emulsion solution of 20% vinyl acetate | | | | | | | | | | | | | | | |
| Biodegradable resin | Solution of 1% agar (80°C) | | | | | | | | | | | | | | | |
| Acid degradable resin | Aqueous solution of 1% sodium alginate | | | Impreg nation | | | | | | | | | | | | |
| Disintegrabil ity | Drying temperature: 150°C, 24 h | | | | | | | | | | | | | | | |
| | Freeze-drying | | | | | | | | | | | | | | | |

**Table 3**

| Mixture components (parts by weight) | | Example 11 | | Example 12 | | | Example 13 | | | Comparative Example | | |
|---|---|---|---|---|---|---|---|---|---|---|---|---|
| With (Y) or without (N) cover layer | | Y | Y | N | N | N | N | N | N | N | N | N |
| Nutrients held | | K⁺, NO₃⁻ | NH₄⁺ PO₄³⁻ | K⁺ | NO₃⁻ | PO₄³⁻ | K⁺ | NO₃⁻ | PO₄³⁻ | K⁺ | NO₃⁻ | PO₄³⁻ |
| Cation exchange mineral Zeolite | | | | 10 | | | 10 | | | 10 | | |
| Anion exchange mineral Hydrotalcite | | | | | 10 | 10 | | 10 | 10 | | 10 | 10 |
| Non-ion exchange mineral Kaolin clay | | 10 | 10 | | | | | | | | | |
| Aqueous solution of 0.5% sodium alginate | | 100 | 100 | 100 | 100 | 100 | 100 | 100 | 100 | 100 | 100 | 100 |
| Cross-linking agent | | 5% calcum chloride | | 5% calcium chloride | | | 5% calcium chloride | | | 5% calcium chloride | | |
| Water-soluble resins | Ethanol solution of 20% polyalkylene oxide | | | | | | | | | | 5% calcium | chloride |
| | Aqueous solution of 20% polyethylene glycol | Impregna tion | | | | | | | | | | |
| | Aqueous solution of 40% polyvinyl alcohol | | Impregnation | | | | | | | | | |
| | Aqueous solution of 2% guluronate-rich alginic acid (soluble in phosphoric acid) | | | | | | | | | | | |
| | Aqueous emulsion solution of 20% vinyl acetate | | | | | | | | | | | |
| Biodegradabl e resin | Solution of 1% agar (80°C) | | | | | | | | | | | |
| Acid degradable resin | Aqueous solution of 1% sodium alginate | | | | | | | | | | | |
| Disintegrabi lity | Drying temperature: 150°C, 24 h | | | | | ○ | | | | | | |
| | Freeze-drying | | | | | | | | ○ | | | |

The results of Examples 1 to 13 and Comparative Example of Tables 1 to 3 are as follows.

### (1) Examples 1, 3, and 4

The artificial soil particle holding nitrate nitrogen and potassium did not have a cover layer, and therefore, released nitrate nitrogen and potassium during an initial plant growing period. Also, the artificial soil particle holding phosphoric acid was covered with a lowly water-soluble resin, and therefore, the cover layer was degraded by moisture during a late stage of the plant growth period, and released phosphoric acid during a late plant growing period.

### (2) Example 2

The artificial soil particle holding nitrate nitrogen and potassium did not have a cover layer, and therefore, released nitrate nitrogen and potassium during an initial plant growing period. Also, the artificial soil particle holding phosphoric acid was covered with a highly water-soluble resin, and therefore, the cover layer was degraded by moisture during an early stage of the plant growth period, and released phosphoric acid during an intermediate plant growing period.

### (3) Example 5

The artificial soil particle holding nitrate nitrogen and potassium did not have a cover layer, and therefore, released nitrate nitrogen and potassium during an initial plant growing period. Also, the artificial soil particle holding phosphoric acid was covered with a biodegradable resin, and therefore, the cover layer was degraded by a microorganism during an early stage of the plant growth period, and released phosphoric acid during an intermediate plant growing period.

### (4) Example 6

The artificial soil particle holding nitrate nitrogen and potassium did not have a cover layer, and therefore, released nitrate nitrogen and potassium during an initial plant growing period. Also, the artificial soil particle holding phosphoric acid was covered with an acid degradable resin (phosphoric acid degradable resin), and therefore, the cover layer was degraded by the phosphoric acid held during an early stage of the plant growth period, and released phosphoric acid during an intermediate plant growing period.

### (5) Example 7

The artificial soil particle holding nitrate nitrogen and potassium did not have a cover layer, and therefore, released nitrate nitrogen and potassium during an initial plant growing period. Also, the artificial soil particle holding phosphoric acid was covered by a cover layer of guluronate-rich alginic acid, which is soluble in phosphoric acid, and therefore, the cover layer was degraded by the phosphoric acid held during an early stage of the plant growth period, and released phosphoric acid during an intermediate plant growing period.

### (6) Example 8

The artificial soil particle holding nitrate nitrogen and potassium did not have a cover layer, and therefore, released nitrate nitrogen and potassium during an initial plant growing period. Also, the artificial soil particle holding calcium was covered with a highly water-soluble resin, and therefore, the cover layer was degraded by moisture during an early stage of the plant growth period, and released calcium during an intermediate plant growing period. Also, the artificial soil particle holding phosphoric acid was covered with a lowly water-soluble resin, and therefore, the cover layer was degraded by moisture during a late stage of the plant growth period, and released phosphoric acid during a late plant growing period.

### (7) Example 9

The artificial soil particle holding potassium was covered with a highly water-soluble resin, and therefore, the cover layer was degraded by moisture during an early stage of the plant growth period, and released potassium during an intermediate plant growing period. Also, the artificial soil particle holding nitrate nitrogen was covered with a lowly water-soluble resin, and therefore, the cover layer was degraded by moisture during a late stage of the plant growth period, and released nitrate nitrogen during a late plant growing period.

### (8) Example 10

The artificial soil particle holding nitrate nitrogen and potassium was covered with a highly water-soluble resin, and therefore, the cover layer was degraded by moisture during an early stage of the plant growth period, and released nitrate nitrogen and potassium during an intermediate plant growing period. Also, the artificial soil particle holding phosphoric acid was covered with a lowly water-soluble resin, and therefore, the cover layer was degraded by moisture during a late stage of the plant growth period, and released phosphoric acid during a late plant growing period.

### (9) Example 11

The artificial soil particle holding nitrate nitrogen and potassium was covered with a highly water-soluble resin, and therefore, the cover layer was degraded by moisture during an early stage of the plant growth period, and released nitrate nitrogen and potassium during an intermediate plant growing period. Also, the artificial soil particle holding ammonia nitrogen and phosphoric acid was covered with a lowly water-soluble resin, and therefore, the cover layer was degraded by moisture during a late stage of the plant growth period, and released ammonia nitrogen and phosphoric acid during a late plant growing period. In Example 11, the filler is formed of kaolin clay, which is a non-ion exchange mineral, and therefore, the rate of release of the nutrients was slightly higher than those of the other examples.

### (10) Example 12

The artificial soil particle holding nitrate nitrogen and potassium did not have a cover layer, and therefore, released nitrate nitrogen and potassium during an initial plant growing period. Also, the artificial soil particle holding phosphoric acid did not have a cover layer, and included the base which is easily disintegrable, and therefore, began releasing phosphoric acid during an initial plant growing period, and ended releasing phosphoric acid during an intermediate plant growing period.

### (11) Example 13

The artificial soil particle holding nitrate nitrogen and potassium did not have a cover layer, and therefore, released nitrate nitrogen and potassium during an initial plant growing period. Also, the artificial soil particle holding phosphoric acid did not have a cover layer, and included the base which is easily disintegrable, and therefore, began releasing phosphoric acid during an intermediate plant growing period, and ended releasing phosphoric acid during an intermediate plant growing period.

### (12) Comparative Example

The artificial soil particle holding nitrate nitrogen, potassium, and phosphoric acid did not have a cover layer, and therefore, released nitrate nitrogen, potassium, and phosphoric acid during an initial plant growing period. In other words, in Comparative Example, all the nutrients were released during the same period.

The above results demonstrated that the artificial soil medium of the present invention can supply, to a plant to be grown, appropriate nutrients in appropriate amounts during appropriate stages of the growth of the plant.

### INDUSTRIAL APPLICABILITY

The artificial soil medium of the present invention is applicable to cultivation of plants in plant factories, etc., and other applications such as indoor horticultural soil media, greening soil media, molded soil media, soil conditioners, soil media for interior decoration, etc.

### REFERENCE SIGNS LIST

- 1: FILLER
- 2: SMALL HOLE
- 10: BASE
- 20: COVER LAYER
- 50: ARTIFICIAL SOIL PARTICLE
- 100: ARTIFICIAL SOIL MEDIUM

## Claims

1. An artificial soil medium including a plurality of artificial soil particles configured to release a nutrient, **characterized in that**
the plurality of artificial soil particles include a plurality of types of artificial soil particles configured to release different nutrients during different stages of a plant cultivation period.

2. The artificial soil medium of claim 1, **characterized in that**
the plurality of types of artificial soil particles are configured to release a nutrient in response to a change in an external environment.

3. The artificial soil medium of claim 1 or 2, **characterized in that**
at least one of the plurality of types of artificial soil particles is covered with a degradable resin.

4. The artificial soil medium of claim 3, **characterized in that**
the degradable resin is at least one selected from the group consisting of water-soluble resins, biodegradable resins, and acid degradable resins.

5. The artificial soil medium of claim 3, **characterized in that**
the degradable resin is at least one selected from the group consisting of starch, cellulose, pectin, gelatin, agar, alginates, carrageenan, xanthan gum, locust bean gum, tara gum, psyllium seed gum, dextrin, polyvinyl alcohol, polyacrylic acids, polyacrylamide, vinyl acetate, polyethyleneimine, polyalkylene oxide, polyethylene glycol, methyl cellulose, carboxymethyl cellulose, hydroxyethyl cellulose, modified starches, and oxidized starch.

6. The artificial soil medium of any one of claims 1 to 5, **characterized in that**
the plurality of types of artificial soil particles are formed by granulation using different degradable resins.

7. The artificial soil medium of any one of claims 1 to 5, **characterized in that**
the plurality of types of artificial soil particles are formed by drying under different drying conditions.

8. The artificial soil medium of any one of claims 1 to 7, **characterized in that**
at least one of the plurality of types of artificial soil particles has ion exchange capability.

9. The artificial soil medium of claim 8, **characterized in that**
the plurality of types of artificial soil particles include an artificial soil particle having cation exchange capability, an artificial soil particle having anion exchange capability, and an artificial soil particle having cation and anion exchange capabilities.

10. The artificial soil medium of any one of claims 1 to 9, **characterized in that**
the plurality of types of artificial soil particles have a particle size of 0.2 to 10 mm.
